(19)

Europäisches
Patentamt
European
Patent Office
Office européen
des brevets

(11) **EP 3 072 393 A1**

(12) **EUROPEAN PATENT APPLICATION**
published in accordance with Art. 153(4) EPC

(43) Date of publication:
**28.09.2016 Bulletin 2016/39**

(21) Application number: **14862753.2**

(22) Date of filing: **04.11.2014**

(51) Int Cl.:
*A01N 25/30* (2006.01)          *A01N 25/00* (2006.01)
*A01N 59/06* (2006.01)          *A01P 3/00* (2006.01)

(86) International application number:
**PCT/JP2014/079168**

(87) International publication number:
**WO 2015/072361 (21.05.2015 Gazette 2015/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.11.2013 JP 2013237695**

(71) Applicant: **Ube Material Industries, Ltd.
Ube-shi
Yamaguchi 755-8510 (JP)**

(72) Inventors:
• **SAKAI, Shoji
Ube-shi
Yamaguchi 755-8510 (JP)**
• **ITO, Shinichi
Yamaguchi-shi
Yamaguchi 753-8511 (JP)**

(74) Representative: **Michalski Hüttermann & Partner
Patentanwälte mbB
Speditionstraße 21
40221 Düsseldorf (DE)**

(54) **PLANT DISEASE CONTROL AGENT, AND PLANT DISEASE CONTROL METHOD**

(57)    A plant disease control agent contains a magnesium oxide obtained by firing magnesium hydroxide at 400 to 1000°C and a nonionic surfactant that contains a polyoxyalkylene group and has an HLB value of 14.5 or less. Alternatively, a plant disease control agent contains a magnesium oxide that generates radical species and nonionic surfactant that contains a polyoxyalkylene group and has an HLB value within a range of 14.5 or less.

EP 3 072 393 A1

## Description

**Field**

The present invention relates to a plant disease control agent and a plant disease control method using calcined magnesium oxide.

## BACKGROUND

Plant diseases are disease damages that plants contract, causing a problem such as low productivity of agricultural products. Through a contact with pathogenic bacteria or similar bacteria and a growth of the bacteria, the plants are subject to the disease. That is, the plants are subject to the disease through three processes: 1) presence of pathogenic bacteria or similar bacteria, 2) the contact of the pathogenic bacteria or similar bacteria with the plants, and 3) the growth of the pathogenic bacteria or similar bacteria. Accordingly, removing at least any one of these three factors ensures suppressing and controlling the disease damage.

The plant diseases include various kinds such as soil-borne infectious plant disease and airborne infectious plant disease. For example, the following has been known. With soil-borne infectious disease damage (hereinafter sometimes referred to as a soil-borne disease), bacteria, filamentous fungi, or similar fungi, which inhabit in soil and have plant pathogenicity, infect a crop from the root. When the bacteria, filamentous fungi, or similar fungi move inside the plant body and grow, normal growth of the crop is inhibited, and if critical, this results in wilting and death. Furthermore, some bacteria and filamentous fungi, which have the plant pathogenicity, not only infect the crop from the soil as described above but also from a phylloplane of the crop or a similar route. For example, the crop is got infected with a tomato gray mold by conidia of the pathogenic bacteria flying in the air and attaching to a surface of the crop such as the phylloplane.

As a plant disease control agent for controlling the plant disease, there has been conventionally known a technique of using a magnesium oxide formed by firing magnesium hydroxide at a low temperature (also referred to as calcined magnesium oxide) (for example, see Patent Literature 1). Coordinatively unsaturated unpaired electrons on surfaces of crystals of the calcined magnesium oxide generate radical species through a reaction with hydrogen atoms, which are likely to be abstracted, in the atmosphere. It is inferred that an induction of manifestation of a disease resistance gene of a plant by these radical species controls the plant disease. That is, it is considered that the calcined magnesium oxide abstracts the hydrogen atoms of polyhydric phenol and unsaturated fatty acid from a surface composition of the plant and generates reactive oxygen species.

Meanwhile, as a general method to enhance the effect of the plant disease control agent, the following technique has been known. A surfactant is added to an active ingredient to achieve solubilization of an active substance into a solvent and improvement in dispersibility of microparticles, enhancing reactivity (for example, see

Patent Literatures 2 to 4).

**Citation List**

**Patent Literature**

Patent Literature 1: WO2013/99663 (claim 1 and a similar description)
Patent Literature 2: Japanese Patent No. 4434638 (claim 1 and a similar description)
Patent Literature 3: Japanese Unexamined Patent Application Publication No.
2005-145847 (claim 2 and a similar description)
Patent Literature 4: Japanese Unexamined Patent Application Publication No.
2004-83486 (claims 1 and 7 and a similar description)
Patent Literature 5: Japanese Unexamined Patent Application Publication No. 2010-261075 (paragraph 0009 and a similar description)

**Summary of Invention**

**TECHNICAL PROBLEM**

The above-described calcined magnesium oxide is a solid, and the pathogenic bacteria and the plant are also solid. In view of this, the reaction of the calcined magnesium oxide to the polyhydric phenol and the unsaturated fatty acid, which are surface compositions of the pathogenic bacteria and the plant, is a reaction between the solid and the solid, and therefore the contacted area is small. Accordingly, the disease control action weakens.

The polyhydric phenol, which is one of the first targets for the control action with the calcined magnesium oxide, is one component of an epidermal tissue of the plant and the pathogenic bacteria. However, it has been known that the polyhydric phenol quickly reacts to metal ion such as magnesium and is likely to form an insoluble complex (for example, see Patent Literature 5). That is, coexistence of the calcined magnesium oxide with the polyhydric phenol forms the insoluble complex. This inhibits the objective function.

Thus, due to causes that the calcined magnesium oxide and the pathogenic bacteria or the plant produce the reaction of solid-solid base, the above-described insoluble magnesium complex is produced and a similar factor, the action of the calcined magnesium oxide to the pathogenic bacteria and the plant is inhibited. In view of this, further improvement in the control action has been desired for the plant disease control technique using the calcined magnesium oxide.

An object of the present invention is to provide a plant disease control agent and a plant disease control method excellent in a disease control effect.

## SOLUTION TO PROBLEM

To achieve the above-described object, the inventors conducted extensive studies and has found that a combination use of a calcined magnesium oxide and certain a nonionic surfactant outstandingly enhances a disease control effect and has completed the present invention.

That is, the present invention is a plant disease control agent that contains a magnesium oxide obtained by firing magnesium hydroxide at 400 to 1000°C and a nonionic surfactant that contains a polyoxyalkylene group and has an HLB value of 14.5 or less.

From another aspect, the present invention is a plant disease control agent containing a magnesium oxide that generates radical species and a nonionic surfactant that contains a polyoxyalkylene group and has an HLB value of 14.5 or less.

In these cases, the HLB value is preferably 12.5 or more.

In the above-described aspects, the nonionic surfactant preferably contains a polyethylene glycol group as a hydrophilic group. The nonionic surfactant preferably contains an alkyl group or an aryl group with carbon number of 4 to 20 as a hydrophobic group.

In this case, the nonionic surfactant is preferably one or more kinds selected from the group consisting of an octylphenol polyethylene glycol ether and a nonylphenyl polyethylene glycol.

The nonionic surfactant is preferably contained by 0.015 to 1.0 mass%.

The present invention is a plant disease control method that includes using a magnesium oxide together with a nonionic surfactant. The magnesium oxide is obtained by firing magnesium hydroxide at 400 to 1000°C. The nonionic surfactant contains a polyoxyalkylene group and has an HLB value of 14.5 or less.

From another aspect, the present invention is a plant disease control method that includes using a magnesium oxide together with a nonionic surfactant. The magnesium oxide generates radical species. The nonionic surfactant contains a polyoxyalkylene group and has an HLB value of 14.5 or less.

The following is preferable. Applying the magnesium oxide and the nonionic surfactant to a plant by any one of: mixing the magnesium oxide and the nonionic surfactant into a soil plow layer; mixing the magnesium oxide and the nonionic surfactant into a nursery soil; performing a phylloplane treatment with the magnesium oxide and the nonionic surfactant; dipping a root into the magnesium oxide and the nonionic surfactant; and irrigating a plant foot with the magnesium oxide and the nonionic surfactant.

Furthermore, controlling a plant disease selected from the group consisting of a strawberry anthracnose, a bell pepper anthracnose, a cucumber gray mold, a tomato gray mold, or a melon powdery mildew is preferable.

## ADVANTAGEOUS EFFECTS OF INVENTION

As described above, the present invention provides a plant disease control agent and a plant disease control method excellent in a disease control effect.

## DETAILED DESCRIPTION

1. Plant Disease Control Agent

A plant disease control agent of the present invention (hereinafter simply referred to as "plant disease control agent") contains a magnesium oxide and a nonionic surfactant. The magnesium hydroxide is obtained by firing magnesium hydroxide at 400 to 1000°C. The nonionic surfactant contains a polyoxyalkylene group and has an HLB value of 14.5 or less. The following describes details of the plant disease control agent.

(1) Magnesium Oxide

The magnesium oxide used for the present invention is a magnesium oxide formed by firing magnesium hydroxide at a comparatively low temperature, specifically, within a range of 400 to 1000°C and is also referred to as calcined magnesium oxide (hereinafter referred to as "calcined magnesium oxide"). The firing temperature of below 400°C results in insufficient transformation of the magnesium hydroxide into magnesium oxide. Inversely, the firing temperature of more than 1000°C reduces irregularity of a crystalline structure of the magnesium oxide. This is likely to deteriorate a plant disease control effect. The firing temperature is within the above-described range, preferably within the range of 500 to 900°C, and more preferably within the range of 600 to 800°C. Although a firing period is not especially limited, the firing period is usually 5 to 90 minutes and preferably 10 to 60 minutes. A firing environment may be in usual air or may be in an oxidation gas atmosphere.

Here, as the magnesium hydroxide used as the raw material, a magnesium hydroxide-containing compound that contains $Mg(OH)_2$ by 80% or more as the main component may be employed. As a method for producing the magnesium hydroxide, a method that causes seawater to react to lime to generate magnesium hydroxide, a method that purifies brucite, which is a natural mineral, and a similar method can be listed. The magnesium hydroxide may contain a trace amount, for example, 2% or less, of each of $SiO_2$, $Al_2O_3$, $CaO$, $Fe_2O_3$, or $B_2O_3$ (all of them are indicated as oxides). The particle size of the magnesium hydroxide is preferably 1 mm or less. Except for that, the magnesium hydroxide is not specifically limited.

The content of the calcined magnesium oxide is within the range of 0.01 to 1.0 mass% with respect to the total amount of the plant disease control agent adjusted by water dilution. The content is preferably within the range of 0.03 to 0.7 mass%, and more preferably within the range of 0.05 to 0.5 mass%. If the content of the calcined magnesium oxide falls below 0.01 mass%, the plant disease control effect tends to be low. An excess of 1.0 mass% or more is likely to cause a clogging of a spreader during a spray, formation of a plant coating film after the spray, or a similar situation; therefore, this not preferred.

Such calcined magnesium oxide exhibits an excellent plant disease control effect. This is considered because of the following reason. The above-described calcined magnesium oxide catalyzes generation of radical species. The radical species thus generated directly or indirectly acts on the plant disease, and this exhibits the excellent plant disease control effect. That is, it can be said that the calcined magnesium oxide used for the present invention is the magnesium oxide generating the radical species.

The calcined magnesium oxide contained in the plant disease control agent exhibits small solubility to water; therefore, the plant disease control effect can be maintained. The calcined magnesium oxide mixed in the soil is a secondary nutrient required as a magnesium component for crops to grow. Additionally, the calcined magnesium oxide is an inorganic compound with a small solubility to water and therefore is less likely to move outside the soil base. Accordingly, the calcined magnesium oxide is a significantly safe compound in terms of environmental fate.

As the above-described indirect disease damage control, a mechanism where the calcined magnesium oxide induces a resistance against the disease damage that the plants innately have is considered. A manifestation of a disease resistance gene that the plants have is induced by the radical species. Meanwhile, the calcined magnesium oxide has an action of abstracting hydrogen atoms from a compound as a solid base catalyst. It is inferred that the calcined magnesium oxide generates the radical species and induces the manifestation of a resistant gene to suppress and control the disease damage. It is considered that calcined magnesium oxide whose degree of coordinative unsaturation on the crystal surface is high has a strong action of bstracting the hydrogen atoms. As the direct disease damage control, an action where the generated radical species directly damage the pathogenic bacteria to annihilate the pathogenic bacteria is considered.

A BET specific surface of the calcined magnesium oxide is preferably 100 to 400 $m^2$/g. Relative integrated intensity expressed by integrated intensity of a crystal surface (111) with respect to all peaks in X-ray diffraction of the calcined magnesium oxide is preferably 5% or more. The larger the value of the BET specific surface or the higher the relative integrated intensity is, the action of abstracting the hydrogen atoms tends to be stronger, and the disease control effect tends to be higher. For details of the calcined magnesium oxide, the above-described Patent Literature 1 can be referred to.

(2) Nonionic Surfactant

The nonionic surfactant of the present invention (hereinafter simply referred to as "nonionic surfactant") contains a polyoxyalkylene group and a Hydrophile-Lipophile Balance (HLB) value of 14.5 or less. The HLB value of more than 14.5 strengthens hydrophilicity and therefore a mutual interaction with a hydroxyl group in the polyhydric phenol becomes excessively strong. This impairs the function of the polyhydric phenol, and the plant disease control effect tends to be low. As the polyoxyalkylene group, a polyoxyethylene group (a polyethylene glycol group), a polyoxypropylene group, a polyoxybutylene group, and a similar group can be listed. Among them, since the polyethylene glycol group features an excellent plant disease control effect by hydrogen bonding, which will be described later, to the extent by which the function of the polyhydric phenol in the plant surface and the pathogenic bacteria is not deteriorated, the polyethylene glycol group is especially preferable. The HLB value is preferably 12.5 or more. The HLB value of less than 12.5 brings strong hydrophobicity, and therefore the mutual interaction with the hydroxyl group in the polyhydric phenol becomes excessively low. Accordingly, masking of an active site (the hydroxyl group), which will be described later, in the polyhydric phenol is less likely to occur. This does not inhibit formation of an insoluble complex by the reaction of the calcined magnesium oxide with the polyhydric phenol in the plant, and the plant disease control effect tends to be low. The function of the polyhydric phenol in this case means a function of abstracting the hydrogen atoms from the phenol site to generate radicals.

The polyethylene glycol group as a hydrophilic group in the nonionic surfactant preferably contains a high fat-soluble functional group as a hydrophobic group, for example, an alkyl group or an aryl group with carbon number of 4 to 20. A concrete example of such nonionic surfactant may include an octylphenol polyethylene glycol ether (HLB = 13.0, product name: Nonidet P-40), a nonylphenyl polyethylene glycol (HLB = 13.5, product name: Triton X-100), polyoxyethylene branched nonyl cyclohexyl ether (HLB13.5, product name: Triton N-101), polyoxyethylene branched nonylphenoxypolyethoxyethanol (HLB13.8, product name: Triton N-111), and a similar component (both Nonidet and Triton are registered trademarks). The nonionic surfactant may be used alone or may be used by mixing two or more kinds.

Among these, since its excellent plant disease control effect, the nonionic surfactant preferably contains the polyethylene glycol group as the hydrophilic group and an alkylphenyl group containing and an alkylated site with the carbon number of 4 to 20 as the hydrophobic group. Especially, one or more kinds (single or combination use) selected from the group consisting of the octylphenol polyethylene glycol ether and a nonylphenyl polyethylene glycol is preferable.

The content of the nonionic surfactant is within the range of 0.015 to 1.0 mass% with respect to the total amount of the plant disease control agent adjusted by water dilution. The content is preferably within the range of 0.03 to 0.7 mass% and more preferably within the range of 0.05 to 0.5 mass%. With the content of the nonionic surfactant below 0.01 mass%, the hydrogen bonding action is weak in terms of concentration, and the plant disease control effect tends to be low. The content more than 1.0 mass% dissolves cuticula on the surface of the plant, and a damaging action is likely to be provided to the plant.

Containing the above-described nonionic surfactant in the plant disease control agent ensures outstandingly improving the plant disease control effect of the calcined magnesium oxide. The following describes this mechanism in detail.

Containing the above-described nonionic surfactant in the plant disease control agent generates a weak hydrogen bonding between the hydroxyl group in the polyhydric phenol, which is present on the surface of the plant, such as the phylloplane, and the polyoxyalkylene group (for example, the polyethylene glycol group) in the nonionic surfactant. This hydrogen bonding masks the active site of the polyhydric phenol without impairing the function of the polyhydric phenol. This inhibits formation of the insoluble complex by the reaction of the magnesium ion in the calcined magnesium oxide and the polyhydric phenol in the plant. This increases the amount of generated reactive oxygen species on the surface of the calcined magnesium oxide. Accordingly, it is inferred that the polyhydric phenol does not suppress the manifestation function of the resistant gene brought by the radicals generated in the calcined magnesium oxide while the plant disease control effect is improved.

Furthermore, by formation of micelles with the nonionic surfactant, the calcined magnesium oxide is likely to be solubilized in an active substance solvent, while the dispersibility of the calcined magnesium oxide is improved. This improves a contact area of a pathogen and a plant, which are solid, with the calcined magnesium oxide. It is inferred that the plant disease control effect by this feature is also obtained.

(3) Other Components

Other components can be added to the plant disease control agent as long as the components do not inhibit the effects of the present invention. As such components, for example, humic acid can be listed. Here, the humic acid means neutralized salt of nitric acid resolvent of lignite and peat or humic acid salt as a main component of commercially available products produced as a bark compost. The plant disease control agent according to the present invention containing the humic acid exhibits more excellent plant disease control effect. This reason is inferred as follows. Alkali autoxidation is provided on a polyhydric phenol moiety in the humic acid from the calcined magnesium oxide, and the hydrogen atoms in the phenolic hydroxyl group in the humic acid are abstracted by the action of the calcined magnesium oxide, which is a solid base catalyst. This promotes the generation of radical species. In view of this, it is considered that, compared with the case of single use of the calcined magnesium oxide, the combination use of the calcined magnesium oxide and the humic acid further highly manifests resistant genes, enhancing the effect of suppressing and controlling the disease damage. The plant disease control agent according to the present invention preferably contains the humic acid of 20 to 200 pts.mass with respect to 100 pts.mass of the calcined magnesium oxide and more preferable to be 5 to 40 pts.mass. The humic acid may be in the form of a liquid.

Furthermore, within the range of not inhibiting the object of the present invention, for example, a spreading agent such as surfactant other than the above-described nonionic surfactant, a filler such as clay and white carbon, air bubble retarder such as silica sand, and a similar component can also be added.

2. Plant Disease Control Method

The plant disease control method of the present invention the (hereinafter simply referred to as "plant disease control method") is a method that includes using a magnesium oxide (namely, calcined magnesium oxide) together with a nonionic surfactant. The magnesium oxide is obtained by firing magnesium hydroxide at 400 to 1000°C. The nonionic surfactant contains a polyoxyalkylene group and has an HLB value within a range of 14.5 or less. From another aspect, the plant disease control method is also a method that includes using a magnesium oxide (calcined magnesium oxide) together with a nonionic surfactant. The magnesium oxide generates radical species. The nonionic surfactant contains a polyoxyalkylene group and has an HLB value within a range of 14.5 or less. In these cases as well, because of the reason similar to the above-described plant disease control agent, the HLB value is preferably 12.5 or more.

The plant disease control method can include a method of separately applying the above-described calcined magnesium oxide and nonionic surfactant in addition to the method of applying the plant disease control agent into which the above-described calcined magnesium oxide and nonionic surfactant are preliminary mixed. The following describes details of the plant disease control method.

(1) Method of Applying Plant Disease Control Agent

This method features the use of the above-described plant disease control agent. As a specific application method, it is preferable to mix the plant disease control agent into a soil plow layer or into a nursery soil. As an amount of application in the case of mixing the plant disease control agent into seeding or into the soil plow layer before planting, 10 to 200 kg per 10 *a* is preferable and 30 to 130 kg is more preferable. For large amount of application, a soil pH may become in an unpreferable range. In the case where the plant disease control agent is mixed into the soil plow layer at the amount of application of 10 to 200 kg per 10 *a*, an onset restraining effect can be expected by 10 to 97%.

As the method of applying the plant disease control agent, also in the case where the plant disease control agent is mixed into the nursery soil before seeding by 0.01 to 1.0 mass% and is transplanted to a field contaminated with pathogenic bacteria, the onset restraining effect can be expected, exhibiting an onset restraining percentage of 20 to 70%.

Furthermore, the onset restraining effect can be expected also in the case where a phylloplane treatment is performed with the plant disease control agent. A method for the phylloplane treatment with the plant disease control agent includes an application of epipastic of plant disease control agent in the form of water suspension on a cauline leaf, dipping of a cauline leaf into epipastic, and a similar method. For example, the plant disease control agent is diluted into water or a similar liquid to produce water suspension of 100 to 2000 times, preferably 500 to 1000 times. A sufficient amount of the water suspension is sprayed over cauline leaves of a seedling cultivated with non-contaminated molding with a sprinkler or a similar device to the extent that the cauline leaf parts are appropriately wet, and then the seedling is transplanted to the field contaminated with pathogenic bacteria. In this case as well, the onset restraining percentage exhibits 30 to 97%.

A method of application that dips the root into the plant disease control agent is also effective. The method of application of dipping the root can include, for example, a method where a root of a seedling is dipped into water suspension containing the plant disease control agent by 0.01 to 1.0% for one to 60 seconds.

Further, a method of application that irrigates a plant foot with the plant disease control agent is also effective. The method of application of irrigating the plant foot can include, for example, a method that injects water suspension containing plant disease control agent by 0.01 to 1.0% around a rootstock so as to be 0.03 to 0.3% (V/W) with respect to soil of rhizosphere.

(2) Method of Separately Applying Calcined Magnesium Oxide and Nonionic Surfactant

As the plant disease control method, a method that separately applies the above-described calcined magnesium oxide and nonionic surfactant and finally mixes both can also be employed. As the calcined magnesium oxide, a calcined magnesium oxide suspension produced by dispersing the calcined magnesium oxide into water, a calcined magnesium oxide powder, or a calcined magnesium oxide in a similar form can be used. The nonionic surfactant in a solution state can be used.

The order of applying both is not especially limited. The nonionic surfactant may be applied after the calcined magnesium oxide, the calcined magnesium oxide may be applied after the nonionic surfactant, or both may be simultaneously applied as a target for application. In the case of direct application to the leaf and the rootstock of the plant and a similar part, applying the nonionic surfactant first can provide a masking action of the polyhydric phenol by the nonionic surfactant before the calcined magnesium oxide is in contact with the polyhydric phenol on the surfaces of the plant and the pathogenic bacteria; therefore, this is preferable.

The amounts of application of the calcined magnesium oxide and the nonionic surfactant are not specifically limited as long as the total amount is set to be the amounts of application described in "(1) Method of Applying Plant Disease Control Agent."

The plant disease targeted by the above-described plant disease control agent and plant disease control method can include wide plant diseases including not only the soil-borne diseases but also plant diseases caused by airborne infection and similar diseases. Such plant disease can include, for example, the disease damages shown in the following Table 1.

[Table 1]

| Crop | Name of disease |
|---|---|
| Cucurbitaceae | fusarium wilt, damping-off, verticillium wilt |
| Cucumber | Powdery mildew, anthracnose, downy mildew |
| Tomato | Bacterial wilt, fusarium wilt, bacterial canker, gray mold |
| Cruciferae | Clubroot, black rot |
| Strawberry | Chlorosis, verticillium-wilt |
| Spinach | Damping-off, foot rot |
| Japanese radish | Yellows, clubroot |
| Carrot | Bacterial soft rot, root rot |
| Potato | Black scurf, common scab, late blight, anthracnose |
| Onion | Seedling bright, pink root rot |
| Rice | Blast, bakanae disease, bacterial seedling blight |
| Wheat | Fusarium blight, snow mold |
| Soybean | Seedling bright |

Working Example

The following specifically describes the present invention based on working examples. However, the working examples do not limit the object of the present invention.

<Experimental Example 1: Influence of Kind of Nonionic Surfactant Given to Enhancing Effect of Spore Killing of Calcined Magnesium Oxide>

Magnesium hydroxide as a raw material was fired for ten minutes at 800°C with externally heated rotary kiln to obtain calcined magnesium oxide (hereinafter referred to as "C-MgO"). Results of analyzing the chemical composition of the obtained C-MgO were: MgO: 95.8%, CaO: 0.54%, $SiO_2$: 0.13%, $Fe_2O_3$: 0.05%, and $Al_2O_3$: 0.05%.

A spore suspension ($5 \times 10^7$ pieces/ml, 10 μl) of Colletotricum destructivum (C. destructivum) was mixed into a suspension (90 μl) containing 0.1% (w/v) C-MgO. Into the mixed solution, as the nonionic surfactant, any one of 0.1% (w/v) Triton X-100 (octylphenol polyethylene glycol ether: produced by Sigam-Aldrich), Nonidet P-40 (nonylphenyl polyethylene glycol: produced by AGRO-KANESHO CO., LTD.), Tween 20 (polyethylene glycol sorbitan monolaurate: produced by NACALAI TESQUE, INC.), and Tween 80 (polyethylene glycol sorbitan monooleate: produced by NACALAI TESQUE, INC.) were mixed. After the mixed liquid was settled at 25°C for three hours in darkness, Evans blue dye solution (50 mg/ml, 10 μl) was added for dyeing for 30 minutes, and a percentage of died spores, which was turned out to be Evans blue positive, was measured. The results are shown in Table 2.

[Table 2]

|  | Nonionic surfactant | HLB | Percentage of died spores |
|---|---|---|---|
| Working example 1 | Nodinet P-40 | 13.0 | 94 |
| Working example 2 | Triton X-100 | 13.5 | 92 |
| Comparative example 1 | Tween 20 | 16.7 | 10 |
| Comparative example 2 | Tween 80 | 15.0 | 5 |
| Comparative example 3 | Free from additives | - | 7 |

Among the nonionic surfactants, Nodinet P-40 (Working Example 1) and Triton X-100 (Working Example 2) with HLB of 13.0 to 13.5 at which fat-solubility of the hydrophobic group was high exhibited high percentage of died spores of anthrax. The reason that Nodinet P-40 and Triton X-100 significantly increased the percentage of died spores is considered due to the following. The polyethylene glycol group, which is the hydrophilic group in these nonionic surfactants, weakly masked the polyhydric phenol, which served as a substrate generating reactive oxygen species, and this restrained the formation of the insoluble complex caused by the reaction with Mg ion. With Tween 20 and Tween 80, which contain the identical polyethylene glycol group, moiety bonded to the polyethylene glycol group is hydrophilicity. Consequently, the HLB becomes excessively high, and the plant disease effect becomes low.

<Experimental Example 2: Effect of Nonionic Surfactant Given to Generation of Superoxide in Calcined Magnesium Oxide with Polyhydric Phenol Present>

The above-described effect was evaluated by measuring the superoxide generated from the polyhydric phenol (the tannic acid) by a formazan method, which will be described below.
First, suspension (100 $\mu$l) of 1% C-MgO (w/v, dissolved into distilled water), a tannic acid solution (20 $\mu$g/ml, 100 $\mu$l), and nitroblue tetrazolium solution (1 mg/ml, 100 $\mu$l) were mixed. Then, as nonionic surfactant, 0.1% (w/v) Triton X-100 was further added. As controls, a distilled water (adjusted to pH11 with NaOH), an additive liquid of the above-described nonionic surfactant, and a dispersion liquid of C-MgO were employed.
After these mixed liquids were settled for 30 minutes under room temperature, lactic acid (200 $\mu$l) was added to dissolve C-MgO. After application of centrifugal force at $12,000 \times g$ for ten minutes, the pellet was cleaned with the distilled water twice and with 99% ethanol twice. After the pellet after being cleaned was dissolved with 1 ml solution (DMSO, 2M KOH (1.6: 1)), absorbance was measured at 630 nm, and formazan was quantitated by a calibration curve using a standard solution. The results are shown in Table 3. From these results, it has been found that the addition of nonionic surfactant significantly increases the amount of generated superoxide.

[Table 3]

|  | Composition of reaction liquid | Amount of generated superoxide (ng formazan/ug tannic acid/minute) |
|---|---|---|
| Working example 3 | C-MgO + Triton X-100 | 270 |
| Comparative example 4 | C-MgO | 75 |
| Comparative example 5 | Triton X-100 | 0 |
| Comparative example 6 | H2O | 0 |

<Experimental Example 3: Effect of Concentration of Nonionic Surfactant Given to Enhancing Effect of Spore Killing in Calcined Magnesium Oxide>

0.5% (w/v) C-MgO, and Triton X-100 as the nonionic surfactant were employed, and the added concentrations were set to 0, 0.01, 0.02, and 0.05. A testing method for spore killing was as described in Experimental Example 1. The results are shown in Table 4. From these results, it has been found that the percentage of died spores significantly increases with Triton X-100 at the added concentration of 0.37 mM or more.

[Table 4]

|  | Concentration of Triton X-100 | Percentage of died spores |
|---|---|---|
| Comparative example 7 | 0 | 5 |
| Comparative example 8 | 0.01 | 4 |
| Working example 4 | 0.02 | 62 |
| Working example 5 | 0.05 | 89 |

<Experimental Example 4: Enhancing Effect of Nonionic Surfactant Given to Spore Killing Action in Two Kinds of Anthraxes>

Spore suspensions ($5 \times 10^7$ pieces/ ml, 10 $\mu$l) of two kinds of anthraxes, respective Colletotricum destructivum (C.destructivum) and Colletotricum gloeosporioides (C.gloeosporioides) were added to 0.1% (w/v) C-MgO suspension (90 $\mu$l) and alkaline water suspension (pH11, prepared with NaOH, 90 $\mu$l). Furthermore, 0.1% (w/v) nonionic surfactant Triton X-100 was mixed into these solutions. Other conditions are as described in Experimental Example 1. The results are shown in Table 5. From this result, it has been found that the spore killing of the nonionic surfactant added to C-MgO was similar to the anthraxes of different kinds.

[Table 5]

|  |  | C. destructivum | C. gloeosporioides |
|---|---|---|---|
| Working example 6 | C-MgO suspension + Triton | 93 | 87 |
| Comparative example 9 | C-MgO suspension | 8 | 7 |
| Comparative example 10 | Alkaline water | 2 | 2 |

<Experimental Example 5: Enhancing Effect of Restraining Onset of Melon Powdery Mildew Brought by Nonionic Surfactant>

In a plastic greenhouse (which is managed at a temperature of 15 to 30°C) installed at a farmland field (sandy loam), melons (breed: Earls Seinu) were cultivated for three months in a drain bed of the National Federation of Agricultural Co-operative Associations system with a space between rootstocks of 90 cm and a width of a ridge of 500 cm. Powdery mildew spontaneously occurred in the rootstocks of the melons was subject to the test.
C-MgO was diluted to 1,000 times and Agura (nonylphenol polyethylene glycol, produced by AGRO-KANESHO CO., LTD.), which is nonionic surfactant, was diluted to 5,000 times, and a reference drug BELLKUTE WP (produced by NIPPON SODA CO., LTD.) was diluted to 1,000 times. Each of them were sprayed by 300 ml on each rootstock five times in every two weeks. A degree of onset after two and three weeks after spraying on the cauline leaves was examined targeting the upper five true leaves depending on the level of onset, and the degree of onset was obtained by the following expression.

$$\text{Degree of disease} = \Sigma \, (\text{number of leaves infected depending on the disease level} \times \text{exponent}) * 100 / (\text{number of examinations} \times 4)$$

Exponent ••• 0: No onset, 1: 1 to 5%, 2: 6 to 25%, 3: 26 to 50%, 4: 51% or more (% indicates a percentage of a lesion area.)
The results are shown in Table 6. As a result, an outstanding onset restraining effect was recognized by the combination use of C-MgO and Agura.

[Table 6]

|  | Drug under test | Degree of onset |
|---|---|---|
| Working example 7 | C-MgO + Agura | 28.0 |
| Comparative example 11 | C-MgO | 97.5 |

(continued)

|  | Drug under test | Degree of onset |
|---|---|---|
| Comparative example 12 | Agura | 96.0 |
| Comparative example 13 | Reference drug | 32.2 |

**Claims**

1. A plant disease control agent containing:

   a magnesium oxide obtained by firing magnesium hydroxide at 400 to 1000°C; and
   a nonionic surfactant that contains a polyoxyalkylene group and has an HLB value of 14.5 or less.

2. A plant disease control agent containing:

   a magnesium oxide that generates radical species; and
   a nonionic surfactant that contains a polyoxyalkylene group and has an HLB value of 14.5 or less.

3. The plant disease control agent according to claim 1 or 2, wherein
   the HLB value is 12.5 or more.

4. The plant disease control agent according to any one of claims 1 to 3, wherein
   the nonionic surfactant contains a polyethylene glycol group as a hydrophilic group and contains an alkyl group or
   an aryl group with carbon number of 4 to 20 as a hydrophobic group.

5. The plant disease control agent according to claim 4, wherein
   the nonionic surfactant is one or more kinds selected from the group consisting of an octylphenol polyethylene glycol
   ether and a nonylphenyl polyethylene glycol.

6. The plant disease control agent according to any one of claims 1 to 5, wherein
   the plant disease control agent contains the nonionic surfactant by 0.015 to 1.0 mass%.

7. A plant disease control method comprising
   using a magnesium oxide together with a nonionic surfactant, the magnesium oxide being obtained by firing magnesium hydroxide at 400 to 1000°C, the nonionic surfactant containing a polyoxyalkylene group and having an HLB
   value of 14.5 or less.

8. A plant disease control method comprising
   using a magnesium oxide together with a nonionic surfactant, the magnesium oxide generating radical species, the
   nonionic surfactant containing a polyoxyalkylene group and having an HLB value of 14.5 or less.

9. The plant disease control method according to claim 7 or 8, wherein:

   applying the magnesium oxide and the nonionic surfactant to a plant by any one of:

   mixing the magnesium oxide and the nonionic surfactant into a soil plow layer;
   mixing the magnesium oxide and the nonionic surfactant into a nursery soil;
   performing a phylloplane treatment with the magnesium oxide and the nonionic surfactant;
   dipping a root into the magnesium oxide and the nonionic surfactant; and
   irrigating a plant foot with the magnesium oxide and the nonionic surfactant.

10. The plant disease control method according to any one of claims 7 to 9, further comprising
    controlling a plant disease selected from the group consisting of a strawberry anthracnose, a bell pepper anthracnose,
    a cucumber gray mold, a tomato gray mold, or a melon powdery mildew.

## INTERNATIONAL SEARCH REPORT

| International application No. |
|---|
| PCT/JP2014/079168 |

**A. CLASSIFICATION OF SUBJECT MATTER**
*A01N25/30*(2006.01)i, *A01N25/00*(2006.01)i, *A01N59/06*(2006.01)i, *A01P3/00* (2006.01)i

According to International Patent Classification (IPC) or to both national classification and IPC

**B. FIELDS SEARCHED**

Minimum documentation searched (classification system followed by classification symbols)
A01N25/30, A01N25/00, A01N59/06, A01P3/00

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)
JSTPlus(JDreamIII), JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| A | WO 2013/099663 A1 (Ube Material Industries, Ltd.), 04 July 2013 (04.07.2013), claims; paragraphs [0017], [0019] & EP 2798955 A1 & US 2014/356461 A1 & TW 201340873 A & JP 2013-256488 A | 1-10 |
| A | JP 2011-245399 A (Mikuni Color Ltd.), 08 December 2011 (08.12.2011), claims (Family: none) | 1-10 |
| A | JP 2008-137900 A (Kabushiki Kaisha Ishiguro Seiyakusho), 19 June 2008 (19.06.2008), claims (Family: none) | 1-10 |

☐ Further documents are listed in the continuation of Box C.       ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 27 January 2015 (27.01.15) | 10 February 2015 (10.02.15) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 201399663 A
- JP 4434638 B
- JP 2005145847 A
- JP 2004083486 A
- JP 2010261075 A